# EUROPEAN PATENT SPECIFICATION

(11) **EP 3 423 415 B1**
(45) Date of publication and mention of the grant of the patent: **02.12.2026**
(21) Application number: 17707415.0
(22) Date of filing: 21.02.2017
(51) Int. Cl.: C02F 1/40, C08J 9/40

(54) **REUSABLE SORBENT SPONGES, THEIR METHOD OF PRODUCTION AND THEIR USE FOR THE IN-SITU REMEDIATION OF OIL SPILLS**
WIEDERVERWENDBARE SAUGFÄHIGE SCHWÄMME, VERFAHREN ZUR HERSTELLUNG UND DEREN VERWENDUNG ZUR IN-SITU-SANIERUNG VON ÖLAUSLAUF
ÉPONGES DE SORBANT RÉUTILISABLES, LEUR PROCÉDÉ DE PRODUCTION ET LEUR UTILISATION POUR LA DÉCONTAMINATION IN SITU DE DÉVERSEMENTS DE PÉTROLE

(30) Priority: 02.03.2016 IT UB20161249
(43) Date of publication of application: 09.01.2019
(73) Proprietor: Fondazione Istituto Italiano di Tecnologia, 16163 Genova (IT)
(72) Inventor: PINTO SANZ, Javier, I-16163 Genova (IT); FRAGOULI, Despina, I-16163 Genova (IT); ATHANASIOU, Athanasia, I-16163 Genova (IT); CINGOLANI, Roberto, I-16163 Genova (IT)
(74) Representative: Mola, Edoardo
(86) International application number: PCT/IB2017/050972
(87) International publication number: WO 2017/149407

(56) References cited:
- EP-A1- 1 911 781
- EP-A1- 1 911 781

## Description

### TECHNICAL FIELD

The present invention refers to the environmental safety field and, specifically, to the clean-up and remediation of oil spills.

In particular, the present invention is relevant to a reusable sorbent sponge comprising a support structure made of an open pore flexible polyurethane foam and at least one oily substance.

More in particularly, the present invention concerns a reusable sorbent sponge comprising a support structure made of an open pore flexible polyurethane foam and at least one oily substance.

The present invention also regards a method for producing the aforesaid reusable sorbent sponge.

The present invention is preferably and advantageously applied for the in-situ remediation of oil spills.

### PRIOR ART

The clean-up and remediation process of large amounts of oil spills has become a demanding requirement for environmental safety, due to the occurrence of environmental accidents during oil extraction, transportation or processing.

The type of materials and the methods used for the clean-up vary widely and depend on a number of factors including, among others, oil type and density, water temperature, atmospheric conditions, volume of the spill, proximity to shorelines and speed of response.

From low-tech approaches, such as physical containment, skimming and burning, to high-tech systems using sophisticated dispersants, giant separators that vacuum oil from the surface and bioremediation, the technique applied to any given spill must be carefully chosen, as thoroughly exposed in M. Fingas, The Basics of Oil Spill Cleanup. Third Edition, CRC Press, Boca Raton (USA), 2013.

In particular, the several solutions that have been proposed so far for dealing with the problem of oil spills include:
- mechanical means such as skimmers, booms, pumps, mechanical separators and the like;
- bioremediation by means of bacteria, fungi and yeasts able to break up complex compounds into smaller compounds used as food;
- chemical dispersants such as detergents, solvents, surfactants and the like; and
- sorbents to remove oil from water through adsorption and/or absorption.

Among these proposed solutions, one of the most effective and cheap methods of cleaning oil spills is the use of sorption systems, which employ materials having hydrophobic and oil absorption properties, i.e. being able to repel the water and absorb the oil; after use, the oil soaked material is collected and, depending on its type, the absorbed oil is squeezed and then rebroadcasted or disposed.

The efficiency of a sorbent depends on its recyclability, wettability, density, geometry, sorption capacity and sorption rate; a common requirement for all sorbents is that they must be spread on the spill before the oil viscosity increases (due to evaporation of volatile components) to the point that sorption is no longer possible.

Currently, most of the commercial oil absorbents for the remediation of oil spills are based on polypropylene fibers, which present a high hydrophobicity and oleophilicity and an absorption capacities about 10-14 gram of oil per gram of polymer; since polypropylene is an inexpensive polymer these absorbents have a great competitiveness, but with the main drawback that they cannot be reused. Therefore, there still be the need of suitable absorbent materials for large-scale oil spills remediation able to replace current commercial products, which should present a high oil absorption capacity (preferably over 15 gram of oil per gram of polymer) and, at the same time, being reusable and low-cost systems.

According to these requirements, flexible polyurethane (PU) foams are among the most promising materials; it is well known that PU foams can present very high oil absorption capacities, as disclosed in the above-mentioned citation M. Fingas, The Basics of Oil Spill Cleanup. Third Edition, CRC Press, Boca Raton (USA), 2013, but the main drawbacks of these materials for oil spill remediation are related to their poor oil-water selectivity, depending on their exact chemical composition and porous structure, and/or to the inability to reach their potential maximum absorption capacity, due to inappropriate porous structure features.

The studies developed so far on the majority of the functionalized polymeric foams to be used as efficient oil absorbents for the remediation of oil spills are focused on sophisticated surface treatments, while the significant role of the morphological parameters of the porous structure of the pristine foams remains unexplored.

At present, it is known that pristine polyurethane foams with highly interconnected open porous structures, and pore sizes below 500 µm are able to reach oil absorption capacities as high as 30 gr of oil per gr of polyurethane; chemical functionalization of the porous structure does not increase further the oil absorption efficiency, but it significantly contributes to the increase of the selectivity of the process.

Recent studies by the same Applicant (see Effect of the porous structure of polymer foams on the remediation of oil spills. Javier Pinto, Athanassia Athanassiou and Despina Fragouli. Journal of Physics D: Applied Physics 49 (2016) 145601 (8pp)) aim at proving that the structural parameters of the pores of the polymeric foams play a fundamental role for the efficient removal of oil from water and, in particular, that the appropriate selection of the structural parameters of PU foams leads to absorbent materials with high oil absorption capacities and efficiencies, significantly better than commercially available products, without the need of additional surface treatments; as aforesaid, open porous structures with high connectivity and pore sizes about or below 500 µm present the best performance in terms of oil absorption efficiency and oil saturation time, this addressing to a careful selection of the porous structure PU-based absorbent materials for the remediation of oil spills while, on the contrary, surface treatments are just required to enhance the oil-water selectivity of the system and to decrease the oil saturation times, but not to increase the oil absorption capacity. At the moment, then, the main parameters involved in the selection of PU foams as sorbents, are the chemical composition and the porous structure; as a consequence, pristine PU foams suitable for their direct use on oil spills remediation require very specific chemical and porosity features, which increase dramatically the price of the foam and decrease the potential advantages or competitiveness of their use.

Several research works have reported increased oil absorption capacity and oil-water selectivity of PU foams by means of the chemical modification of their surface properties; in particular, the same Applicant developed a previous approach providing to PU foams not only a high selectivity but also a magnetic response, as published in P. Calcagnile, D. Fragouli, I.S. Bayer, G.C. Anyfantis, L. Martiradonna, P.D. Cozzoli, R. Cingolani, A. Athanassiou, Magnetically Driven Floating Foams for the Removal of Oil Contaminants from Water, ACS Nano, 6 (2012) 5413-5419.

An example of a preparation method of enhanced sorbents for oil spill remediation characterized by high sorption capacity, oil/water selectivity and reusability is reported in the paper Oil sorbents with high sorption capacity, oil/water selectivity and reusability for oil spill cleanup. Wu et al. Marine Pollution Bulletin 84 (2014) 263-267; in order to fulfill the mentioned requirements, polyurethane sponges were chosen as starting materials because of their low cost, durability, flexibility and, above all, their huge amount of connected holes; the scope of this work is to improve the oil/water selectivity by enhancing the hydrophobicity of foams' surface. In particular, commercially available polyurethane sponges were subsequently dip-coated in aqueous SiO₂ sol, containing 0.5 wt.% of SiO₂ nanoparticles, for 30 minutes and thereafter in gasoline for 15 minutes; after both immersions, the soaked foams were centrifuged to remove liquid and dried naturally at room temperature; the comparative SEM investigations, carried out on the polyurethane foam before and after the treatments, show little geometrical difference in the holes structures and significant changes of the foam surface from smooth to rough, due to the attachment of silica nanoparticles onto the pore struts and walls.

However, these approaches present in general some disadvantages:
- most of them require the use of nanoparticles or chemical treatments, which may increase significantly the price of the final products;
- the proposed treatment procedures are in general hardly scalable;
- the toxicological hazards of the possible release to the environment of the nanoparticles employed are not issued;
- some of the aforesaid solutions propose treatments that will contaminate the recovered oil, making impossible further utilization.

In particular, the solution described in the above paper by Wu et al., tough being address to provide sorbents for oil spill remediation and reporting an immersion step in gasoline, does not mention any mechanical squeezing during said immersion; moreover, no hint can be found to the use of a PU foam having specific pore size and porosity.

On the other hand, less scientific and patent literature can be found about the structural modification of the polyurethane foams in a post-production phase by a mechanical approach.

The US Patent application no. US 2004/0126559 A1, which refers to the field of absorbers for inks or dye inks in ink-jet printers, teaches that polyurethane foams are materials suitable to be employed as ink wastage absorbers due to their high absorptivity and their flexibility, overcoming the drawbacks of other materials such as felt and non-woven that are in strict contact with the printer heads; in particular, the document reports a process for producing an ink wastage absorber, starting from a polyurethane precursor and appropriate additives which allow to obtain an absorber with improved properties. According to this document, the density of the polyurethane foams is set in a range of 0.005 to 0.150 g/cm³ (5-15 kg/m³) and it can be employed as prepared or compressed by hot pressing (in the range 150-240°C) in order to improve its capillarity properties; in both cases, the flexible polyurethane foam shows an air permeability higher than 1 cc/cm²/sec (preferably from 20 to 200 cc/cm²/sec) measured according to the JIS L1004 method. Among the described embodiments, a dip-coating step of the polyurethane foam in order to impregnate the material with a water dispersed surface active agent is reported; said active agent may be cationic, anionic, non-ionic or amphiphilic, denatured sodium succinate being the preferred choice; said active agent is preferably water soluble in order to simplify the following drying step and its amount can be varied depending on the desired final properties of the product; the last steps consist in squeezing water from the treated polyurethane foam and drying the final product.

In particular, the solution described in the above US Patent application, tough reporting a traditional dip-coating process, specifically in a huge variety of active agents, does not teach to squeeze the foam during immersion; moreover, neither the use of a PU foam having specific pore size and porosity nor the application of an oily solution as functionalizing agent are mentioned; furthermore, if this solution would be combined to the above-mentioned paper by Wu et al., i.e. where the internal surface of the PU foam would be functionalized by SiO₂ nanoparticles to improve absorption properties thereof, only a preliminary hot pressing to improve the capillarity of the foam could be added.

The European Patent application no. EP 0 181 751 A1 refers to a filter element for automotive air intake filters; in particular, a dust collection composition having the ability to be consistently impregnated in a polyurethane foam, suitable to be employed as filter element, is disclosed. According to this document, the dust collection composition is a gel comprising a fire-resistant organophosphorus fluid and fumed silica gelling agent; the polyurethane foam may comprise a plurality of layers of different density or porosity with a cylindrical form stiffened with a cylindrical opened sleeve, otherwise the polyurethane foam may also be a single layer of impregnated foam in the form of a cylinder. This document also describes the preparation process of the gel impregnated foam filter, which provides that the foam body may be loaded with gel by spraying at room temperature or by immersion in a bath, being the latter the preferred embodiment to achieve a uniform distribution; in both approaches the desired final amount of gel in the foam is from 0.01 to 0.15 g/cm³ and, in case of bath immersion, the final step consists in passing the loaded foam through squeeze rollers to discharge excess gel material.

In particular, the solution described in the above European Patent application, tough reporting a traditional dip-coating process, specifically in a gel comprising fumed silica and organophosphorus fluid, does not teach to squeeze the foam during immersion; moreover, neither the use of a PU foam having specific pore size and porosity nor the application of an oily solution as functionalizing agent are mentioned; furthermore, if this solution would be combined to the above-mentioned paper by Wu et al., i.e. where a mechanical squeezing step would be applied, this would be only intended as a last removal step of the dip-coating process without aiming at causing structural modifications.

None of the above-mentioned technical solutions, nor any combination thereof, is able to provide a reusable sorbent sponge with a functionalized internal surface and an improved pore structure starting from an open pore flexible polyurethane foam with low local pore connectivity.

In particular, none of the above-mentioned technical solutions, nor any combination thereof, is able to provide a reusable sorbent sponge with a structural modification of the starting polyurethane foam in a post-production phase by a mechanical approach. Moreover, none of the above-mentioned technical solutions, nor any combination thereof, is able to provide a dip-coating method able both to functionalize the internal surface and to improve the pore structure of an open pore flexible polyurethane foam with low local pore connectivity, specifically by means of a structural modification of the starting polyurethane foam in a post-production phase by a mechanical approach. In particular, none of the above-mentioned technical solutions, nor any combination thereof, is able to provide a dip-coating method ensuring that a structural modification happens in PU foams with low local connectivity (i.e. PU foams presenting many pore walls) due to the combination of two mechanical squeezing steps.

Finally, none of the above-mentioned technical solutions, nor any combination thereof, is able to provide a method for using a reusable sorbent sponge with a functionalized internal surface and an improved pore structure starting from an open pore flexible polyurethane foam with low local pore connectivity, whose structure has been modified in a post-production phase by a mechanical approach.

Therefore, even if many technical solutions as sorbents are available based on open pore flexible polyurethane foams, there still exists the need of a sorbent having the appropriate pore structure for oil absorbance and being reusable.

Specifically, there still exists the need of a competitive, effective and reusable sorbent material for in-situ oil spill remediation starting from low cost materials.

Moreover, there still exists the need of a method to produce a reusable sorbent with functionalized internal surface and improved pore structure, specifically through a structural modification of the starting polyurethane foam in a post-production phase by a mechanical approach.

In brief therefore, up to the present time, to the Applicant's knowledge, there are no known solutions allowing to provide reusable sorbent sponges and the methods for producing such sponges and for using them for the in-situ remediation of oil spills such that:
- provide an easy scalable, low cost and quick functionalizing method for polyurethane foams which overpass the drawbacks of the previous proposed technics;
- present a significant improvement respect to the current commercial approaches employed for the remediation of oil spills;
- answer to the increasing demand of high efficient solutions for an important environmental problem such us the remediation of oil spills;
- improve oleophilicity and local pore connectivity properties, without damaging the struts of polyurethane foams lacking structural specific requirements for oil sorption;
- employ cheap and industrially available starting materials;
- allow the rapid treatment of large quantities;
- provide an easy scalable oil recovery procedure;
- allow an efficient oil remediation process, achieving high overall oil absorption capacities (over 600 gram of oil per gram of Polyurethane) and being able to recover more than 95% of this oil for further uses.
- allow a highly repeatable absorption-recovery cycles involving reusable sorbent materials;
- are easily combinable with other known approaches (i.e. PP fabrics) to improve also the hydrophobicity;
- are suitable to be carried out in-situ on the boats involved in the oil spill remediation.

Therefore the Applicant, with the reusable sorbent sponges and the methods for producing such sponges and for using them for the in-situ remediation of oil spills according to the present invention, intends to remedy such lack.

### OBJECTS AND SUMMARY OF THE INVENTION

It is an object of the present invention to overcome the drawbacks of the known prior art related to sorbent materials, specifically for large-scale oil spills remediation.

It is a specific object of the present invention to overcome the drawbacks of the known prior art related to the oil sorption capacity, oil-water selectivity and recyclability of sorbent materials based on polyurethane (PU) foams.

It is a more specific object of the present invention to overcome the drawbacks of the known prior art related to the porous structure of sorbent materials based on polyurethane (PU) foams.

The present invention intends to solve the problem of enhancing the properties of polyurethane (PU) foams unsuitable to be employed as sorbents materials.

In particular, the present invention aims at providing a reusable sorbent sponge with functionalized surface and improved internal structure based on an open pore polyurethane (PU) foam.

The present invention also aims at providing as a dip-coating method to be applied on polyurethane foams lacking the appropriate pore structure for oil absorbance and able both to functionalize the internal surface and to improve the pore structure of an open pore flexible polyurethane (PU) foam with low local pore connectivity.

The present invention also aims at providing a method of using a reusable sorbent sponge with functionalized surface and improved internal structure as a competitive sorbent material for the in-situ remediation of oil spills starting from low cost materials.

The aforesaid and other objects and advantages of the invention, as will appear from the following description, are achieved with a reusable sorbent sponge according to claim 1.

Moreover, the aforesaid and other objects and advantages of the invention are achieved with a method for producing a reusable sorbent sponge according to claim 7.

Moreover, the aforesaid and other objects and advantages of the invention are achieved with a method for the in-situ remediation of oil spills by means of reusable sorbent sponges according to claim 10.

Preferred embodiments and variants of the reusable sorbent sponge and of the methods of the present invention are the subject-matter of the dependent claims.

Advantageously, the technical solution according to the present invention allows to:
- improve oleophilicity and local pore connectivity properties, without damaging the struts of polyurethane foams lacking structural specific requirements for oil sorption;
- employ cheap and industrially available starting materials;
- rapidly treat large quantities of oil spills and easily scale-up oil recovery procedures;
- significantly increase the overall oil absorption capacities and efficiently recover more than 95% of this oil for further uses;
- highly repeat absorption-recovery cycles involving reusable sorbent materials;
- easily use in combination with other known approaches, i.e. polypropylene (PP) fabrics, to improve hydrophobicity too;
- considerably improve competitiveness with respect to the current commercial approaches employed for the remediation of oil spills.

Further advantageous features will appear more evident from the following description of preferred but not exclusive embodiments, merely given by way of explanatory and not limiting example.

### BRIEF DESCRIPTION OF THE DRAWINGS

The present invention will be described hereinbelow by means of some preferred embodiments, given by way of explanatory and not limiting example, with reference to the accompanying drawings. These drawings illustrate different aspects and examples of the present invention and, where appropriate, similar structures, components, materials and/or elements in different figures are denoted by similar reference numbers.
Figure 1A shows a SEM micrograph of a first starting polyurethane foam employed in comparative experiments and, specifically, of a PU-30 foam having density of 30 kg/m³;
Figure 1B shows a SEM micrograph of a second starting polyurethane foam employed in comparative experiments and, specifically, of a PU-30-b foam having density of 30 kg/m³;
Figure 1C shows a SEM micrograph of a third starting polyurethane foam employed in comparative experiments and, specifically, of a PU-10 foam having density of 10 kg/m³;
Figure 2 is a flow chart showing the steps of the method for producing a reusable sorbent sponge according to the present invention;
Figure 3 is a flow chart showing the steps of the method for the in-situ remediation of oil spills according to the present invention;
Figure 4A shows a schematic representation of the dip-coating of foams followed by the in-situ oil spill remediation process according to the prior art;
Figure 4B shows a schematic representation of the dip-coating of foams followed by the in-situ oil spill remediation process according to the present invention;
Figure 5A shows a SEM micrograph of a pristine polyurethane foam and, specifically, of a PU-10 foam having density of 10 kg/m³;
Figure 5B shows a SEM micrograph of a polyurethane foam, and specifically of a PU-10 foam having density of 10 kg/m³, treated by a dip-coating method with mineral oil according to the prior art;
Figure 5C shows a SEM micrograph of a polyurethane foam, and specifically of a PU-10 foam having density of 10 kg/m³, pre-impregnated with mineral oil by the method according to the present invention;
Figure 6A shows a SEM micrograph of the porous structure of a PU-10 foam with density of 10 kg/m³ before the pre-impregnation in mineral oil by the method according to the present invention;
Figure 6B shows a SEM micrograph of the porous structure of a PU-10 foam with density of 10 kg/m³ after the pre-impregnation in mineral oil by the method according to the present invention;
Figure 7 shows a thermogravimetric graph comparing a PU-10 foam, a mineral oil and a pre-impregnated PU-10 foam with mineral oil according to the present invention;
Figure 8 shows a bar chart comparing the motor oil absorption performances of several pristine and treated polyurethane foams;
Figure 9 shows a bar chart comparing the water absorption performances of several pristine and treated polyurethane foams;
Figure 10 shows a bar chart comparing the motor oil absorption performances in presence of water of several pristine and treated polyurethane foams; and
Figure 11 shows a graph reporting the outcomes of the reusability tests performed on polyurethane foams treated according to the present invention.

### DETAILED DESCRIPTION OF THE INVENTION

While the invention is susceptible of various modifications and alternative constructions, some preferred embodiments are shown in the drawings and will be described in detail hereinbelow.

In the following description, therefore, the use of "for example", "etc." and "or" denotes non-exclusive alternatives without limitation, unless otherwise indicated; the use of "also" means "among, but not limited to", unless otherwise indicated.

In the present specification, the following terms have the following meanings:
"starting material" means a flexible polyurethane foam, specifically an open pore flexible polyurethane foam with low local pore connectivity; in particular a "starting material", as herein defined and used, refers to an open pore flexible polyurethane foam having global pore connectivity upper than 80%, porosity ranging between 0.930 and 0.996 (corresponding to a density between 84 and 5 kg/m³, respectively) and average pore size lower than 2 mm; in the present specification the two terms "starting sorbent material", "starting polyurethane foam" and "open pore flexible polyurethane foam" are used indistinctively, as synonyms;
"sponge" means a porous material, specifically a porous material based on a "starting material" as defined hereinabove;
"sorbent" means a material having sorption capacities of at least 1 gram of oil per gram of polymer;
"reusable" means the ability to use sorbents without any performance loss for at least for three times; as referred to in the present specification, the term "reusable sorbent sponge" identifies a "sorbent sponge", as defined hereinabove, being usable at least for three times.

In the present specification, the following terms are defined as follows:
"average pore size" is the size of pores calculated from the diameter of at least fifty individual pores measured by image analysis from micrographs of the foams;
"foam's porosity" is the ratio between the volume of voids and the total volume of a generic sample of material taken as basis for the definition;
"foam's global pore connectivity" is the open pore content associated to cracks and missing pore walls, e.g. 100% of open pores (or global pore connectivity) means that every pore is virtually accessible from the outer part of the same generic sample as above through the other pores (following a more or less tortuous path depending on the local pore connectivity);
"foam's local pore connectivity" is the degree of connectivity between adjacent pores due to the absence of pore walls between them (i.e. the percentage ratio between the number of adjacent pores to one single pore without pore walls between them and the total number of adjacent pores to one single pore): $\frac{number of adjacent pores to one single pore without pore walls between them}{total number of adjacent pores to one single pore} %$

From the above definition of "foam's local pore connectivity", the following categories can be established:
- high connectivity (corresponds to 100% local pore connectivity): the pores are connected with all their adjacent pores, i.e. the porous structure is composed only of struts with no presence (or negligible presence) of pore walls;
- medium connectivity (corresponds to 50% < local pore connectivity < 100%): the pores are connected with most (but not all) of their adjacent pores;
- low connectivity (corresponds to local pore connectivity < 50%): the pores are connected with less than half of their adjacent pores.

Regarding the oily substances, the American Petroleum Institute classification is referred to in the present specification; on this basis, the petroleum/oils are classified in terms of their specific gravity (measured at 60 °F, equivalent to 15.5 °C) using the API gravity, which is defined as follows: $API gravity = \left(141.5/Specific Gravity\right) - 131.5$

The API gravity is used to classify oils as light, medium, heavy, or extra heavy:
- light oil: API > 31.1 (corresponding to density (ρ) < 870 kg/m³)
- medium oil: API between 22.3 and 31.1 (corresponding to 870 kg/m³ < ρ < 920 kg/m³)
- heavy oil: API between 10.0 and 22.3 (corresponding to 920 kg/m³ < ρ < 1,000 kg/m³)
- extra heavy oil: API < 10.0 (corresponding to ρ > 1,000 kg/m³); these oils do not float in water.

The present invention is based on the innovative concept of providing a structural modification of a starting low density polyurethane (PU) foam by impregnating it with an oily substance and mechanically treating the impregnated PU foam, with the aim of enhancing the properties of the starting low density PU foam, specifically of functionalizing the surface and improving the internal structure of the starting low density PU foam unsuitable to be employed as sorbents materials; the modified PU foam has improved local pore connectivity and increased oil absorption ability. Specifically, the present invention provides efficient and competitive modified PU foams suitable to be used for in-situ oil spill remediation.

From a physical-chemical point of view, the improvement of the porous structure is achieved through a dip-coating method comprising a mechanical squeezing that does not damage the struts of the starting PU foam, thus obtaining an improvement of the oil absorption ability thereof.

Independent aspects of the present invention, which will be described in detail hereinafter, refer to:
- a reusable sorbent sponge having an improved porous after having been mechanically impregnated with an oily substance;
- a method for producing the aforesaid reusable sorbent sponge; and
- a method for using the aforesaid reusable sorbent sponge for the in-situ remediation of oil spills.

The reusable sorbent sponge according to one aspect of the present invention, independent and autonomously usable with respect to the other aspects of the invention, comprises a support structure made of an open pore flexible polyurethane (PU) foam and at least one oily substance.

The reusable sorbent sponge of the present invention is obtained by impregnating the starting PU foam with the oily substance and by mechanically squeezing it, Given the previous definitions, the reusable sorbent sponge of the invention has global pore connectivity of 100%, porosity ranging between 0.970 and 0.990 and average pore size lower than 1 mm, preferably lower than 0.5 mm.

In particular, the target foam's porosity is selected considering the minimum porosity able to achieve absorption capacities similar to the commercial polypropylene (PP) fibers, i.e. absorption capacities of about 10-15 g/g, said values being reached in the range 0.930-0.950 of porosity.

The reusable sorbent sponge of the invention presents a thin layer of the oily substance covering the foam's struts and walls.

Preferably, the reusable sorbent sponge presents the thin layer of the oily substance covering the foam's struts and walls has an average thickness ranging between 0.1 µm and 30 µm, preferably of 1-2 µm.

Preferably, the oily substance is selected from the group comprising an API low, medium or heavy oily substance, i.e. from the group of oily substances having density lower than 1,000 kg/m³ and viscosity ranging between 14 and 1000 mPa.s.

More preferably, the oily substance is motor oil with density about 878 kg/m³ and viscosity about 287 mPa.s.

The reusable sorbent sponge of the present invention has a maximum absorption capacity of about 180 g/g, this maximum absorption capacity being reached with porosities of at least 0.996; the best performances in terms of capacity and reusability can be obtained between 0.970-0.990 of porosity.

The obtained pre-impregnated polyurethane foam, thanks to the enhanced connectivity and the presence of a thin layer covering the foam's struts and walls, is suitable to be employed in oil spill remediation processes characterized by absorption and recover steps of the oil.

In order to prove the efficacy of the reusable sorbent sponge of the present invention, tests have been carried and will be discussed in detail hereinafter.

In these tests, three kinds of polyurethane (PU) foams were employed as starting material for comparative purposes:
- the first type of PU foams has been named, and it is herein referred to as, PU-30;
- the second type of PU foams has been named, and it is herein referred to as, PU-30-b; and
- the third type of PU foams has been named, and it is herein referred to as, PU-10.

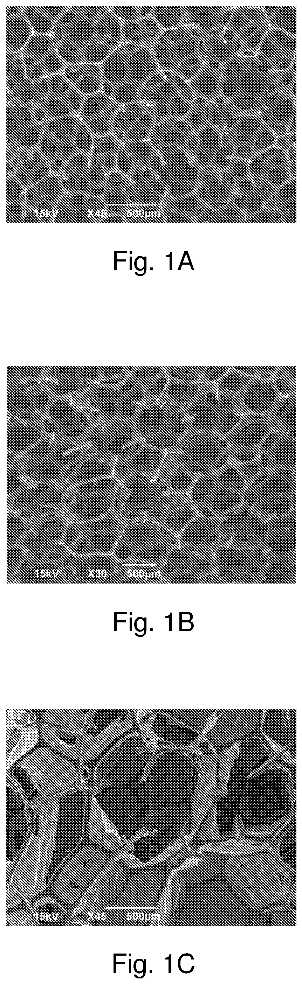

A PU-30 foam, whose morphological aspect is shown in Fig. 1A, has a density of about 30 kg/m³, an average pore size of about 500 µm and a very high local pore connectivity of about 100%; this kind of foam is an expensive material used in filtration processes and presents a good performance without any kind of treatment, reaching oil absorption capacities of about 30 gram of oil per gram of PU foam and oil saturation times (i.e. time needed for a sample of 1 cm³ to reach its maximum oil absorption capacity after being placed into diesel oil) of about 40 seconds.

A PU-30-b foam, whose morphological aspect is shown in Fig. 1B, presents almost the same features as PU-30, e.g. a density of about 30 kg/m³ and average pore size of about 700 µm; however, it presents a medium local pore connectivity of about 90-95%, which leads to a worse performance, since the foam is unable to become fully saturated while the oil absorption capacities reach 19 gram of oil per gram of PU foam.

A PU-10 foam, whose morphological aspect is shown in Fig. 1C, has a density of about 10 kg/m³, an average pore size of about 1,000-1,500 µm, and a low local pore connectivity of about 10-20% (each pore is connected with just a few of its surrounding pores, with several closed pore walls); this kind of foam is a cheap material used in packaging and presents a poor oil absorption performance, reaching absorption capacities lower than 10 gram of oil per gram of PU foam, without becoming fully saturated of oil even after more than 15 minutes.

Regarding the oily substances, the following oils were employed for comparative purposes:
- motor oil (SAE 15W-40): density of about 878 kg/m³, viscosity of 287 mPa.s, classified as API medium oil;
- mineral oil: density of about 840 kg/m³, viscosity of 14.2-17.2 mPa.s, classified as API low oil;
- oleic acid: density of about 890 kg/m³, viscosity of 40 mPa.s, classified as API medium oil;
- peanuts oil: density of about 910 kg/m³, viscosity (at 40 °C) of 40 mPa.s, classified as API medium oil;
- two different silicone oils: density of about 970 kg/cm³, viscosities of 500 and 1,000 mPa.s, classified as API heavy oil.

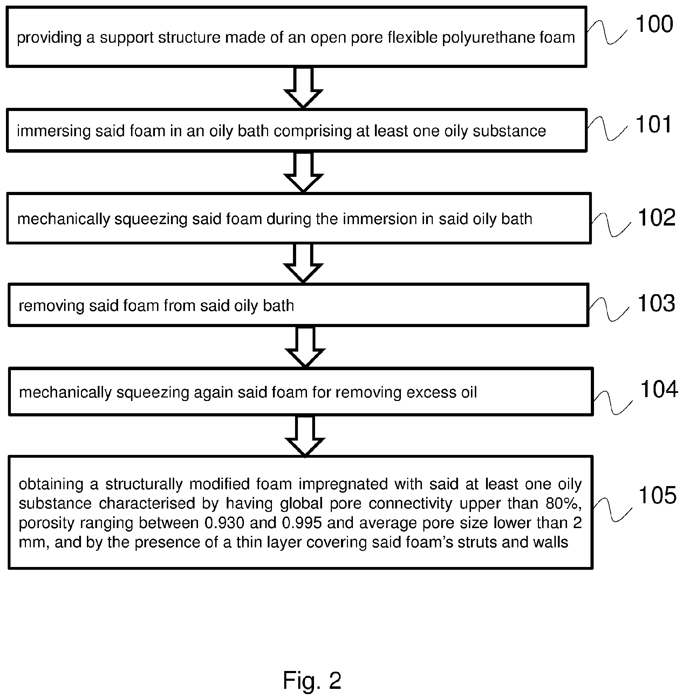

According to another aspect of the present invention, independent and autonomously usable with respect to the other aspects of the invention, and referring to Fig. 2, a method for producing a reusable sorbent sponge is herein disclosed.

Given the previous definitions, the method for producing a reusable sorbent sponge according to the invention comprises the following steps:
- providing a support structure made of an open pore flexible polyurethane foam (step 100);
- immersing said foam in an oily bath comprising at least one oily substance (step 101);
- mechanically squeezing said foam during the immersion in said oily bath (step 102);
- removing said foam from said oily bath (step 103);
- mechanically squeezing again said foam for removing excess oil outside said oily bath (step 104); and
- obtaining a structurally modified foam impregnated with said at least one oily substance characterised by having global pore connectivityof 100%, porosity ranging between 0.970 and 0.990 and average pore size lower than 1 mm, preferably lower than 0.5 mm , and by the presence of a thin layer covering said foam's struts and walls (step 105).

Preferably, said thin layer covering said foam's struts and walls has an average thickness ranging between 0.1 µm and 30 µm, preferably is of 1-2 µm.

Preferably, said oily bath is a solution of an API low, medium or heavy oily substance, i.e. having density below 1000 kg/m³ and viscosity between 14 and 1,000 mPa.s; more preferably, said oily bath is similar to the target oil to be absorbed.

More precisely, the above-mentioned method is a dip-coating method aiming at structurally modifying an open pore flexible polyurethane foam, thus improving the oil sorption properties thereof.

The method of the invention is suitable to be applied on polyurethane foams lacking the appropriate pore structure for oil absorbance, thus providing a competitive sorbent material for in-situ oil spill remediation starting from low cost materials.

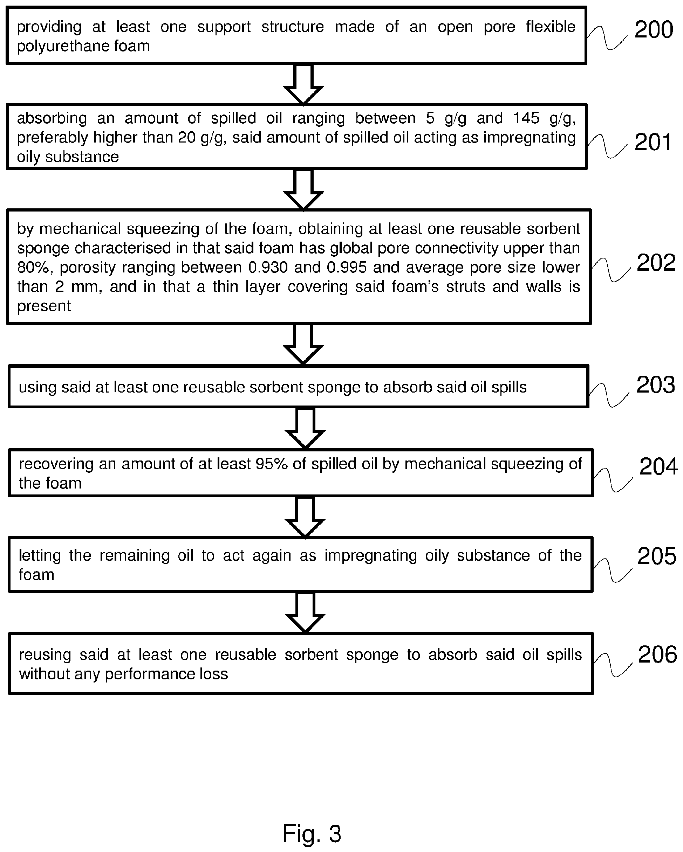

According to another aspect of the present invention, independent and autonomously usable with respect to the other aspects of the invention, and referring to Fig. 3, a method for the in-situ remediation of oil spills by means of reusable sorbent sponges is herein disclosed.

The method for the in-situ remediation of oil spills comprises the following steps:
- providing at least one support structure made of an open pore flexible polyurethane foam (step 200);
- absorbing an amount of spilled oil ranging between 5 g/g and 180 g/g, preferably higher than 20 g/g, said amount of spilled oil acting as impregnating oily substance (step 201);
- by mechanical squeezing of the foam, obtaining at least one reusable sorbent sponge characterised in that said foam has global pore connectivity of 100%, porosity ranging between 0.970 and 0.990 and average pore size lower than 1 mm, preferably lower than 0.5 mm, and in that a thin layer covering said foam's struts and walls is present (step 202);
- using said at least one reusable sorbent sponge to absorb said oil spills (step 203);
- recovering an amount of at least 95% of spilled oil by mechanical squeezing of the foam (step 204);
- letting the remaining oil to act again as impregnating oily substance of the foam (step 205); and
- reusing said at least one reusable sorbent sponge to absorb said oil spills without any performance loss (step 206).

Preferably, the above-mentioned method provides that the same oil which is intended to be removed is also employed as impregnating oil.

The employment of the pre-impregnated foam, obtained by the above described method, in oil spill remediation processes allows to reach the maximum oil absorption efficiencies and high oil absorption rates; advantageously, for the in situ application, the same oil which is intended to be removed can be employed as impregnating oil after recovering of a small amount of the spilled method. Furthermore, after the oil spill absorption, more than 95% of the oil can be recovered, without any contamination due to the absorbent, by mechanical squeezing of the foam; remaining oil will act again as an oily treatment of the PU foams surface, allowing the reuse of the absorbent without any performance loss.

Although the present invention is not aimed at improving the hydrophobicity of the polyurethane foams, it can be easily combined with well-known hydrophobicity improvement methods, such as the employment of an oil/water selective envelope, e.g. a polypropylene (PP) fabric, or a complementary surface treatment; as PP fabric envelopes are currently employed in combination of PP fibers as inner absorbent, the person skilled in the art will easily replace the PP fibers with the polyurethane foams without any technical difficulties and also without any additional costs.

The advantage of the proposed invention is that it provides a simple, quick, easy scalable and cheap method to obtain polyurethane sorbents for oil spill remediation. According to the present invention, high efficient and reusable oil sorbents can advantageously be obtained also starting from polyurethane foams with local pore connectivity unsuitable for oil absorbance, thus making possible to employ as oil sorbents also low cost polyurethane foams without the optimal initial porous structure.

According to this procedure, it is possible to improve widely the competitiveness of current commercial approaches to in-situ remediation processes of oil spills, comprising an absorbing step followed by a recovery of the oil for further uses, either taking into account just single use of the PU-based sorbents or taking advantage of their potential reusability and in the latter case the competitiveness improvement is of several orders of magnitude.

As anticipated, the efficacy of the present invention has been tested by means of some examples, which are to be understood as illustrative but not limitative of the present invention.

As anticipated, the three kinds of polyurethane foams named PU-30, PU-30-b and PU-10 and the six oils previously specified were employed for comparative purposes. Hereinbelow the innovative treatment procedure on a PU-10 foam is reported, compared to a traditional dip-coating process applied to the same material. Thereafter, comparative absorption experiments on pristine, dip-coated, pre-impregnated according to the present invention PU-10, PU-30 and PU-30-b foams are reported.

In the following experiments, the oily substances were generally employed as commercially available; moreover, oleic acid and mineral oil were dissolved in the commercially available solvent ethyl acetate.

### Sample preparation

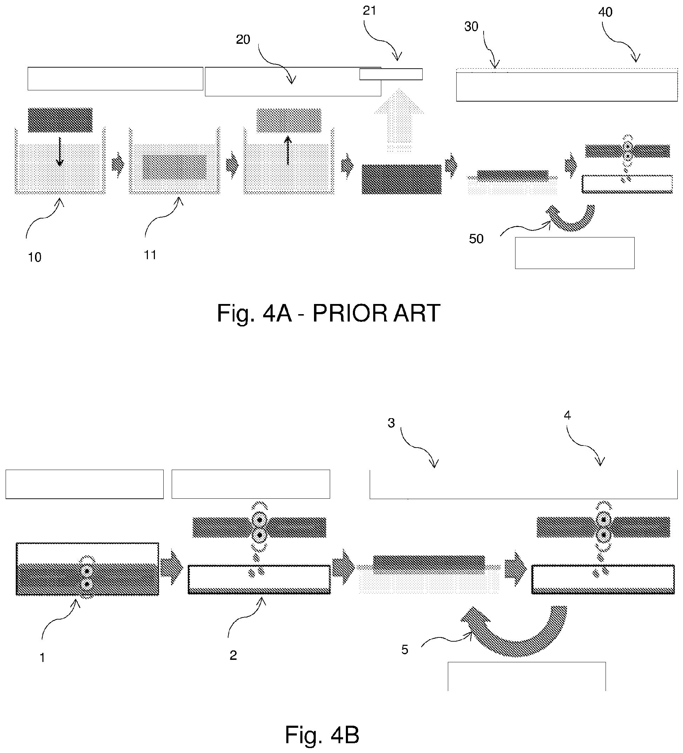

With reference to Figs. 4A and 4B, the sample preparation steps according to a prior art method and to the method of the present invention, respectively, are schematically outlined; in particular, the prior art method is a dip-coating process in an ethyl acetate solution of 2.5-5 mg/ml mineral oil/oleic acid, while the method of the present invention provides the immersion and squeezing steps in oily substances; in both cases the oil spill remediation steps are also reported.

With reference to Fig. 4A, PU-10 foams were treated by dip-coating into solutions of oleic acid or mineral oil in ethyl acetate as follows: solutions were prepared adding 2.5 and 5.0 mg/ml of the oleic acid or mineral oil to 20 ml of ethyl acetate (step 10); then, foam samples of 1 cm³ were immersed in the solution for 3 minutes (step 11), extracted (step 20) and dried under the lab hood at room temperature for causing solvent evaporation (step 21); after complete solvent evaporation, it was found that about 0.15-0.20 gram of oleic acid/mineral oil per gram of PU foam were transferred to the PU foam using 2.5 mg/ml solution and about 0.39-0.43 gram of oleic acid/mineral oil per gram of PU foam in the case of 5.0 mg/ml solutions.

The foam samples obtained according to the aforesaid prior art method, as shown in Fig. 4A, can then be used for oil spills absorption in open waters (step 30); a subsequent step of mechanical squeezing to recover the oil is provided (step 40) and the reuse of the absorbent is provided too (step 50).

With reference to Fig. 4B, the innovative method of the present invention was applied: the foam samples were immersed into the oily substance and squeezed while immersed to release all the air entrapped inside the foam promoting the absorption of the oily substance (step 1), then extracted and mechanically squeezed to remove all the exceeding oily substance (step 2); in this case slightly higher mass gain, from 0.5 to 1.0 g/g, was obtained by the simpler immersion and squeezing procedure ("pre-impregnation") in each one of the employed oily substances (oleic acid, mineral oil, motor oil, peanuts oil, and silicone oils).

It should be noticed that the oily substance, recovered by squeezing, can be collected and utilized again to treat other foams.

The foam samples obtained according to the aforesaid innovative method, as shown in Fig. 4B, can then be used for oil spills absorption in open waters (step 3); a subsequent step of mechanical squeezing to recover the oil is provided (step 4) and the reuse of the absorbent is provided too (step 5).

The comparison between the prior art method shown in Fig. 4A and the method of the present invention shown in Fig. 4B highlights that, though the removal of an exceeding liquid/gel with enough viscosity from the prior art dip-coating process by mechanical squeezing could cause structural modifications by breaking pore walls in porous structures presenting pore walls, the method of the present invention ensures that structural modifications happens in PU foams with low local connectivity (i.e. PU foams presenting many pore walls) due to the combination of two mechanical squeezing steps during and after the immersion), wherein the first squeezing during the immersion ensures that the oily substance enters even in the pores with less connectivity, and then, during the second squeezing after the immersion, this oily substance coming out from the pores breaks the surrounding pore walls.

### Study of the oil treatment layer

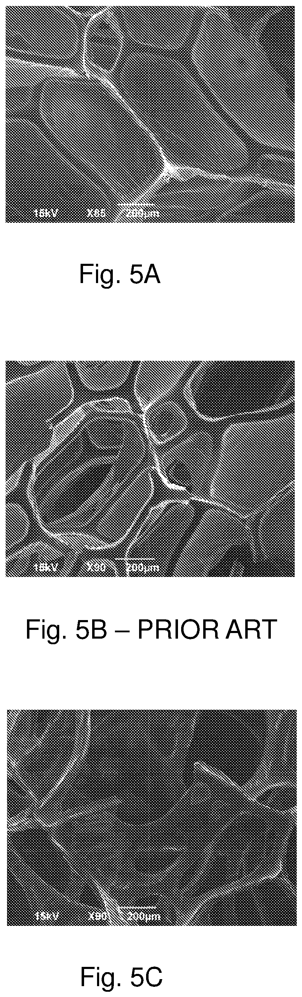

With reference to Figg. 5A, 5B and 5C, the result of the study of the oil treatment layer can be observed; appearance of the PU-10 foam inner surfaces before and after the dip-coating and pre-impregnation processes in mineral oil were studied by scanning electron microscopy (SEM) in order to assess the effects of the method according to the present invention.

As can be seen, dip-coated samples (Fig. 5B) present a very similar aspect to the pristine PU foams (Fig. 5A), whereas the pre-impregnated samples according to the present invention (Fig. 5C) show a clearly different surface appearance, corresponding to an oily layer covering the pore walls and struts.

These differences can be due to the higher amount of remaining oily substance present on the pre-impregnated foams.

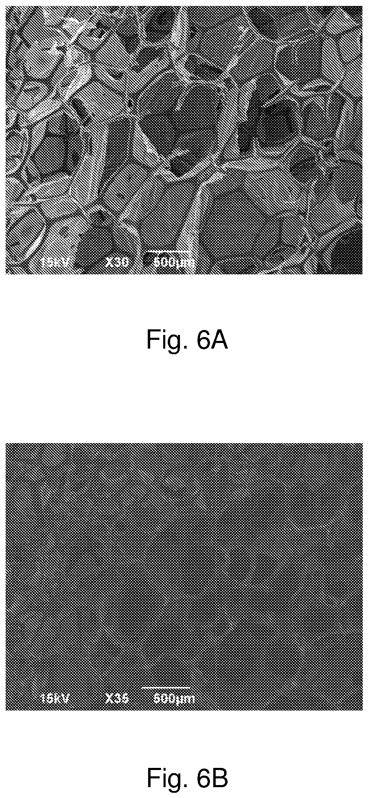

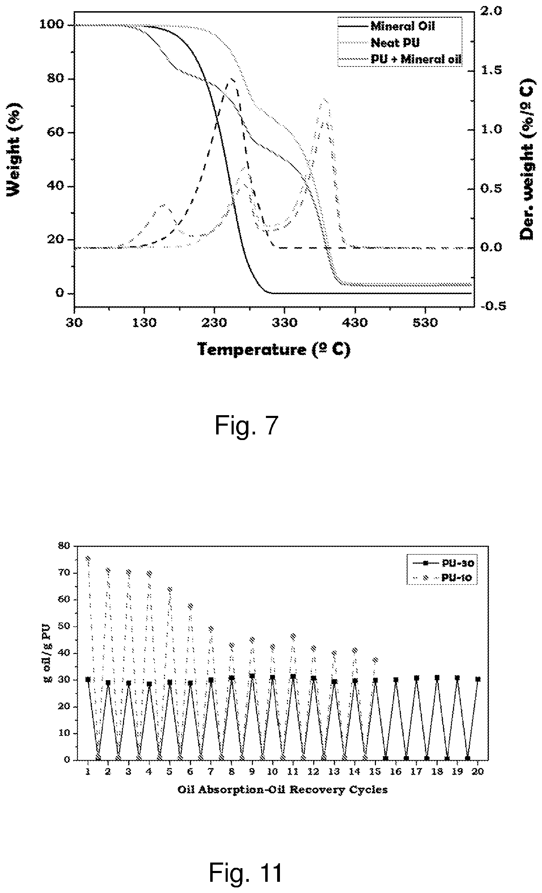

Moreover, the pre-impregnated foams also show changes in their porous structure. Moreover, as confirmed in Figg. 6A and 6B, the pre-impregnation procedure also produces the opening of more connections between pores (breaking thin pore walls during the squeezing process to remove the exceeding oily substance), being this a positive additional effect for oil absorption; in particular, Fig 6A shows the porous structure of a PU-10 foam before the pre-impregnation process and Fig. 6B shows the porous structure of a PU-10 foam after the pre-impregnation process with mineral oil. Moreover, it was found that the absorption of the oily substance on the PU foam's external and inner surfaces is due to weak interactions; as shown in Fig. 7, the thermogravimetric analysis (TGA) of the PU-10 foam, mineral oil, and pre-impregnated PU-10 foam with mineral oil shows that degradation peaks corresponding to the PU-10 foams do not present changes, whereas the degradation peak of the mineral oil is decreased by about 100 °C, when is absorbed onto the PU-10 foam; this significant shift indicates that the small amount of remaining oil in the PU foam is not strongly bonded; in particular, Fig. 7 shows TGA of the PU-10 foam (light dotted and solid lines), mineral oil (dark dotted and solid lines) and pre-impregnated PU-10 foam with mineral oil (medium dotted and solid lines).

### Oil absorption performance

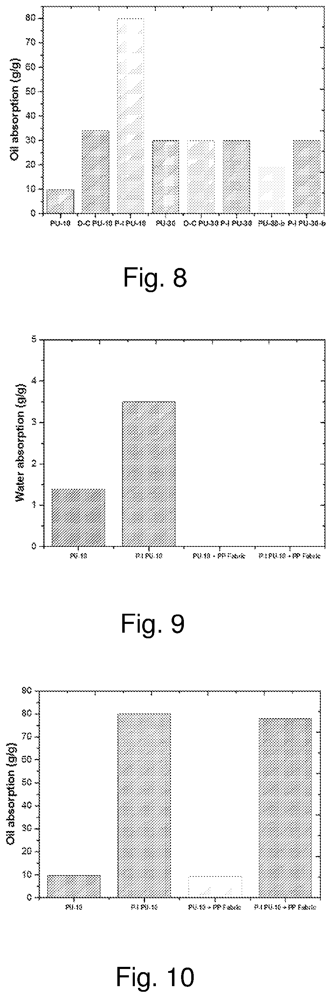

With reference to Fig. 8, oil absorption capacity and saturation time of treated PU-10, PU-30 and PU-30-b foams were tested by placing the foams on the surface of motor oil and weighting the sample after the oil absorption; in particular, Fig. 8 shows oil absorption capacity of pristine and treated (D-C: dip-coated, P-I: pre-impregnated) PU-10, PU-30, and PU-30-b foams.

It was found that the dip-coated PU-10 samples present some improvement of their oil absorption capacity (up to 35-40 g/g), but still are not able to reach full oil saturation; on the contrary, pre-impregnated PU-10 and PU-30-b samples present an optimal performance, reaching an oil absorption capacity respectively about 70-80 g/g and 30 g/g with saturation times below 60 seconds.

On the other hand, as expected PU-30 samples do not present any improvement of their oil absorption capacity, showing only a slight decrease of their oil saturation time from about 40 to 20 seconds.

Similar results were found recovering the other oily substances, such as mineral oil, peanuts oil, and the two different silicone oils: both PU-10 and PU-30-b pre-impregnated samples became fully saturated, reaching oil absorption capacities about 70-80 g/g and 30 g/g, respectively, whereas PU-30 samples shown no changes of their oil absorption capacity and only small decreases of their oil saturation time.

### Oil absorption performance in presence of water

An important feature for the application of these foams in the remediation of oil spills in open waters is to present a small, or even better null, water absorption (i.e. an optimal oil-water selectivity). As beforehand explained, the proposed methodology is not intended to improve the hydrophobicity of the PU foams, but it is easily combinable with approaches to improve the selectivity currently employed in this kind of applications. PU-10 foams were selected to perform these tests according to their higher oil absorption capacity.

Then, the pristine and pre-impregnated foams were tested by placing them on motor oil or distilled water. First, the performance of the foams by themselves was tested, and then both pristine and pre-impregnated foams were tested inside a selective envelope made of PP fabric.

With reference to Fig. 9, the water absorption results of the foams are reported: it was found that without the envelope the pristine foams take about 1.4 gram of water per gram of PU, whereas the pre-impregnated foams present a worse performance with water absorption values about 3.5 g/g; on the contrary, when the PP fabric envelope is employed both treated and untreated foams present a negligible water absorption; in particular, Fig. 9 shows water absorption of pristine and pre-impregnated PU-10 foams, with and without a PP fabric envelope (PP Fabric).

Oil absorption of the same foams is shown in Fig. 10, demonstrating that the oil absorption capacity is not affected by the use, or not, of a fabric envelope; in particular, Fig. 10 shows oil absorption of pristine and pre-impregnated PU-10 foams, with and without a PP fabric envelope (PP Fabric).

Therefore, it was proved that the use of a non-expensive and common approach to increase the oil-water selectivity of oil spills absorbents (i.e. selective fabric envelope) is able to overcome the drawbacks of this invention without reducing its advantages.

### Reusability

Reusability of treated PU foams as oil absorbents was tested carrying out successive cycles of oil absorption and oil recovery by mechanical squeezing.

Both treated PU-10 and PU-30 foams were studied in order to understand the influence of the foams' density, and therefore of their mechanical properties, on their potential reusability.

Oil absorption after each absorption test (high values corresponding to each absorption cycle), as well as the remaining oil (low values, near zero, between consecutive absorption cycles) after the mechanical squeezing between consecutive tests, are shown in Figure 11 for both PU foams; in particular oil absorption and remaining oil for fifteen absorption-recovery cycles (PU-10, dotted line) and twenty absorption-recovery cycles (PU-30, solid line) are shown.

A significant influence of the PU foam's density on the reusability performance is found.

Very low density PU foams (PU-10, 10 kg/m³) present poor mechanical properties, leading to a quick collapse of the porous structure and a consequent reduction of the oil absorption capacity after four cycles; 50% of the original oil absorption capacity is reached after fifteen cycles, when the experiment was stopped; the overall oil absorption capacity of these foams was about 800 gram of oil per gram of PU after fifteen cycles.

On the contrary, low density PU foams (PU-30, 30 kg/m³) present better mechanical response, reaching at least twenty oil absorption-oil recovery cycles without any performance loss; in this case the overall oil absorption capacity is about 600 gram of oil per gram of PU (after twenty cycles), being possible to continue using these foams even increasing their capacity.

It can be expected that even better oil spills remediation devices could be developed from PU foams with intermediate features between PU-10 and PU-30; these materials could present both higher reusability than PU-10 and higher oil absorption capacity than PU-30.

It should be noted that using both foams is was possible to recover nearly all the oil absorbed on each cycle (more than 95%); therefore, both the overall absorption capacity of these treated foams and their recovery ratio are far ahead of current commercial products.

As it is deducible from the above description, the innovative technical solution herein described has the following advantageous features:
- improvement of oleophilicity and local pore connectivity properties, without damaging the struts of polyurethane foams lacking structural specific requirements for oil sorption;
- inexpensive process employing cheap and industrially available starting materials;
- rapid treatment process for large quantities;
- easy scalable oil recovery procedure;
- efficient oil remediation process, achieving the overall oil absorption capacities (over 600 gram of oil per gram of polyurethane) and being able to recover more than 95% of this oil for further uses;
- highly repeatable absorption-recovery cycles involving reusable sorbent materials;
- easily combinable with other known approaches (i.e. PP fabrics) to improve also the hydrophobicity;
- suitable to be carried out in-situ on the boats involved in the oil spill remediation;
- economic competitiveness of this invention (defined as the price in euros € per kg of oil recovered); taking into account the prices of the current commercial products (PP fibers) and their oil absorption capacity as well as the fact that they can be used only once, a range of competitiveness values between 0.13 (best scenario, assuming a price for the PP fibers of 1.75 €/kg and oil absorption capacity about 14 g/g) and 0.23 (worst scenario, assuming a price for the PP fibers of 2.30 €/kg and oil absorption capacity about 10 g/g) is obtained; taking into account the pre-impregnated PU-10 foams of the present invention and a presumably full life of about fifteen absorption cycles, a range of competitiveness values between 0.004 (best scenario, assuming a price for the PU foam of 2.80 €/kg and fifteen absorption cycles with an overall oil absorption capacity about 800 g/g) and 0.05 (worst scenario, assuming a price for the PU foam of 4.00 €/kg and just one absorption cycle with an oil absorption capacity about 74 g/g) is obtained.

Therefore, the invention herein described presents a significant improvement respect to the current commercial approaches employed for the remediation of oil spills and, moreover, it answers to the increasing demand of high efficient solutions for an important environmental problem such us the remediation of oil spills.

From the above description it is clear, therefore, that the reusable sorbent sponges, their method of production and their use for the in-situ remediation of oil spills as the described hereinabove allow to reach the proposed objects.

Other fatty acids or oils can be employed; moreover, for example, incorporation of an inexpensive hydrophobic surface treatment to make unnecessary the use of selective envelopes and optimization of the density or of the mechanical properties of the PU foams for optimizing the oil absorption capacity and long-term reusability can be developed.

## Claims

1. A reusable sorbent sponge comprising
- a support structure made of an open pore flexible polyurethane foam, and
- at least one oily substance,
**characterised in that** said foam, after having been mechanically impregnated with said at least one oily substance, has global pore connectivity of 100%, porosity ranging between 0.970 and 0.990 and average pore size lower than 1 mm, preferably lower than 0.5 mm, and **in that** a thin layer covering said foam's struts and walls is present.

2. The reusable sorbent sponge according to claim 1, **characterised in that** said thin layer covering said foam's struts and walls has an average thickness ranging between 0.1 µm and 30 µm, preferably is of 1-2 µm.

3. The reusable sorbent sponge according to any of the preceding claims, having a maximum absorption capacity of about 180 g/g.

4. A method for producing a reusable sorbent sponge comprising the following steps:
- providing a support structure made of an open pore flexible polyurethane foam (step 100);
- immersing said foam in an oily bath comprising at least one oily substance (step 101);
- mechanically squeezing said foam during the immersion in said oily bath (step 102);
- removing said foam from said oily bath (step 103);
- mechanically squeezing again said foam for removing excess oil (step 104); and
- obtaining a structurally modified foam impregnated with said at least one oily substance **characterised by** having global pore connectivity of 100%, porosity ranging between 0.970 and 0.990 and average pore size lower than 1 mm, preferably lower than 0.5 mm, and by the presence of a thin layer covering said foam's struts and walls (step 105).

5. The method for producing a reusable sorbent sponge according to claim 4, **characterised in that** said thin layer covering said foam's struts and walls has an average thickness ranging between 0.1 µm and 30 µm, preferably is of 1-2 µm.

6. A method for the in-situ remediation of oil spills comprising the following steps:
- providing at least one support structure made of an open pore flexible polyurethane foam (step 200);
- absorbing an amount of spilled oil ranging between 5 g/g and 180 g/g, preferably higher than 20 g/g, said amount of spilled oil acting as impregnating oily substance (step 201);
- by mechanical squeezing of the foam, obtaining at least one reusable sorbent sponge **characterised in that** said foam has global pore connectivity of 100%, porosity ranging between 0.970 and 0.990 and average pore size lower than 1 mm, preferably lower than 0.5 mm, and **in that** a thin layer covering said foam's struts and walls is present (step 202);
- using said at least one reusable sorbent sponge to absorb said oil spills (step 203);
- recovering an amount of at least 95% of spilled oil by mechanical squeezing of the foam (step 204);
- letting the remaining oil to act again as impregnating oily substance of the foam (step 205); and
- reusing said at least one reusable sorbent sponge to absorb said oil spills without any performance loss (step 206).

7. The method for the in-situ remediation of oil spills according to claim 6, wherein the same oil which is intended to be removed is employed as impregnating oil.

## Patentansprüche

1. Wiederverwendbarer saugfähiger Schwamm, umfassend
- eine Trägerstruktur aus einem offenzelligen, flexiblen Polyurethanschaum und
- mindestens eine ölige Substanz,
**dadurch gekennzeichnet, dass** der Schaum nach der mechanischen Imprägnierung mit mindestens einer öligen Substanz eine globale Porenkonnektivität von 100 %, eine Porosität zwischen 0,970 und 0,990 sowie eine mittlere Porengröße von weniger als 1 mm, vorzugsweise weniger als 0,5 mm, aufweist und dass eine dünne Schicht vorhanden ist, welche die Stege und Wände des Schaums bedeckt.

2. Wiederverwendbarer saugfähiger Schwamm nach Anspruch 1, **dadurch gekennzeichnet, dass** die dünne Schicht, welche die Stege und Wände des Schaums bedeckt, eine mittlere Dicke zwischen 0,1 µm und 30 µm, vorzugsweise von 1 bis 2 µm, aufweist.

3. Wiederverwendbarer saugfähiger Schwamm nach einem der vorhergehenden Ansprüche mit einer maximalen Absorptionskapazität von etwa 180 g/g.

4. Verfahren zur Herstellung eines wiederverwendbaren saugfähigen Schwamms, umfassend die folgenden Schritte:
- Bereitstellen einer Trägerstruktur aus einem offenzelligen, flexiblen Polyurethanschaum (Schritt 100);
- Eintauchen des Schaums in ein Ölbad, das mindestens eine ölige Substanz enthält (Schritt 101);
- mechanisches Pressen des Schaums während des Eintauchens in das Ölbad (Schritt 102);
- Entnehmen des Schaums aus dem Ölbad (Schritt 103);
- erneutes mechanisches Pressen des Schaums zur Entfernung von überschüssigem Öl (Schritt 104); und
- Erhalten eines strukturell modifizierten Schaums, der mit mindestens einer öligen Substanz imprägniert ist, **gekennzeichnet durch** eine globale Porenkonnektivität von 100 %, eine Porosität zwischen 0,970 und 0,990 und eine mittlere Porengröße von weniger als 1 mm, vorzugsweise weniger als 0,5 mm, sowie durch das Vorhandensein einer dünnen Schicht, welche die Stege und Wände des Schaums bedeckt (Schritt 105).

5. Verfahren zur Herstellung eines wiederverwendbaren saugfähigen Schwamms nach Anspruch 4, **dadurch gekennzeichnet, dass** die dünne Schicht, welche die Stege und Wände des Schaums bedeckt, eine mittlere Dicke zwischen 0,1 µm und 30 µm, vorzugsweise von 1 bis 2 µm, aufweist.

6. Verfahren zur In-situ-Beseitigung von Ölverlusten, umfassend die folgenden Schritte:
- Bereitstellen mindestens einer Trägerstruktur aus einem offenzelligen, flexiblen Polyurethan-Schaum (Schritt 200);
- Absorbieren einer Menge an verlorenen Öl zwischen 5 g/g und 180 g/g, vorzugsweise mehr als 20 g/g, wobei die Menge an verlorenen Öl als imprägnierende ölige Substanz wirkt (Schritt 201);
- Erhalten mindestens eines wiederverwendbaren saugfähigen Schwamms durch mechanisches Auspressen des Schaums, **dadurch gekennzeichnet, dass** der Schaum eine globale Porenkonnektivität von 100 %, eine Porosität zwischen 0,970 und 0,990 und eine mittlere Porengröße von weniger als 1 mm, vorzugsweise weniger als 0,5 mm, aufweist und dass eine dünne Schicht vorhanden ist, welche die Stege und Wände des Schaums bedeckt (Schritt 202);
- Verwenden mindestens eines wiederverwendbaren, saugfähigen Schwamms zur Aufnahme der Ölverluste (Schritt 203);
- Rückgewinnen einer Menge von mindestens 95 % des verlorenen Öls durch mechanisches Auspressen des Schaums (Schritt 204);
- Belassen des verbleibenden Öls, sodass es erneut als ölige Imprägnierungssubstanz des Schaums wirkt (Schritt 205); und
- Wiederverwenden mindestens eines wiederverwendbaren, saugfähigen Schwamms zur Aufnahme der Ölverlustes ohne Leistungsverlust (Schritt 206).

7. Verfahren zur In-situ-Beseitigung von Ölverlusten nach Anspruch 6, wobei dasselbe Öl, das beseitigt werden soll, als Imprägnierungs-Öl verwendet wird.

## Revendications

1. Eponge absorbante réutilisable comprenant
- une structure de support constituée d'une mousse de polyuréthane flexible à pores ouverts, et
- au moins une substance huileuse,
**caractérisée en ce que** ladite mousse, après avoir été imprégnée mécaniquement avec ladite au moins une substance huileuse, présente une connectivité globale des pores supérieure à 100 %, une porosité comprise entre 0,970 et 0,990 et une taille moyenne des pores inférieure à 1 mm, de préférence inférieure à 0,5 mm, et **en ce qu'**est présente une fine couche recouvrant lesdits montants et parois de la mousse.

2. Eponge absorbante réutilisable selon la revendication 1, **caractérisée en ce que** ladite fine couche recouvrant lesdits montants et parois de ladite mousse présente une épaisseur moyenne comprise entre 0,1 µm et 30 µm, de préférence de 1 à 2 µm.

3. Eponge absorbante réutilisable selon l'une quelconque des revendications précédentes, ayant une capacité d'absorption maximale d'environ 180 g/g.

4. Procédé de fabrication d'une éponge absorbante réutilisable comprenant les étapes suivantes :
- fournir une structure de support constituée d'une mousse de polyuréthane flexible à pores ouverts (étape 100) ;
- immerger ladite mousse dans un bain huileux comprenant au moins une substance huileuse (étape 101) ;
- presser mécaniquement ladite mousse pendant l'immersion dans ledit bain huileux (étape 102) ;
- retirer ladite mousse dudit bain huileux (étape 103);
- presser à nouveau mécaniquement ladite mousse pour éliminer l'excès d'huile (étape 104) ; et
- obtenir une mousse structurellement modifiée imprégnée de ladite au moins une substance huileuse **caractérisée par** une connectivité globale des pores de 100 %, une porosité comprise entre 0,970 et 0,990 et une taille moyenne des pores inférieure à 1 mm, de préférence inférieure à 0,5 mm, et par la présence d'une fine couche recouvrant lesdits montants et parois de ladite mousse (étape 105).

5. Procédé de fabrication d'une éponge absorbante réutilisable selon la revendication 4, **caractérisé en ce que** ladite fine couche recouvrant lesdits montants et parois de ladite mousse présente une épaisseur moyenne comprise entre 0,1 µm et 30 µm, de préférence de 1 à 2 µm.

6. Procédé de dépollution in situ de déversements d'huile comprenant les étapes suivantes :
- fournir au moins une structure de support constituée d'une mousse de polyuréthane flexible à pores ouverts (étape 200) ;
- absorber une quantité d'huile déversé comprise entre 5 g/g et 180 g/g, de préférence supérieure à 20 g/g, ladite quantité d'huile déversé agissant comme substance huileuse d'imprégnation (étape 201);
- au moyen d'une compression mécanique de la mousse, obtenir au moins une éponge absorbante réutilisable, **caractérisée en ce que** ladite mousse présente une connectivité globale des pores de 100%, une porosité comprise entre 0,970 et 0,990 et une taille moyenne des pores inférieure à 1 mm, de préférence inférieure à 0,5 mm, et **en ce qu'**une fine couche recouvrant les montants et parois de ladite mousse est présente (étape 202) ;
- utiliser au moins une éponge absorbante réutilisable pour absorber lesdits déversements s'huile (étape 203) ;
- récupérer une quantité d'au moins 95 % d'huile déversé par compression mécanique de la mousse (étape 204) ;
- laisser l'huile restante agir à nouveau comme substance huileuse d'imprégnation de la mousse (étape 205) ; et
- réutiliser au moins une éponge absorbante réutilisable pour absorber lesdits déversements d'huile sans aucune perte de performance (étape 206).

7. Procédé pour la dépollution in situ des déversements d'huile selon la revendication 6, dans lequel la même huile que celle destinée à être éliminé est utilisé comme huile d'imprégnation.
